(19) Europäisches Patentamt
European Patent Office
Office européen des brevets

(11) **EP 4 733 578 A1**

(12) **DEMANDE DE BREVET EUROPEEN**

(43) Date de publication:
**29.04.2026 Bulletin 2026/18**

(21) Numéro de dépôt: **25208661.6**

(22) Date de dépôt: **14.10.2025**

(51) Classification Internationale des Brevets (IPC):
**F03D 7/04** *(2006.01)*      **F03D 7/02** *(2006.01)*

(52) Classification Coopérative des Brevets (CPC):
**F03D 7/049; F03D 7/046;** F03D 7/0204;
F03D 7/028; F05B 2260/84; F05B 2270/20;
F05B 2270/32; F05B 2270/321

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.10.2024 FR 2411562**

(71) Demandeur: **IFP Energies nouvelles**
**92500 Rueil-Malmaison (FR)**

(72) Inventeurs:
• **BEN FADHEL, Youssef**
**92500 RUEIL-MALMAISON CEDEX (FR)**
• **KHVOENKOVA, Nina**
**92500 RUEIL-MALMAISON CEDEX (FR)**
• **BEN GHARBIA, Ibtihel**
**92500 RUEIL-MALMAISON CEDEX (FR)**
• **GUILLEMIN Fabrice**
**92500 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE CONTROLE D'UNE FERME D'EOLIENNES**

(57)      Procédé de pilotage d'une ferme d'éoliennes, chaque éolienne présentant un point de fonctionnement réglable par un actionneur :

a) une détermination par modélisation d'une région de l'espace approximant le sillage de chaque éolienne pour un angle de désalignement ($\theta$) et pour un seuil de déficit de vitesse de vent ($\delta$),

b) une identification, à partir des sillages modélisés, des éoliennes qui sont dans le sillage modélisé d'une autre éolienne, puis un stockage de paramètres d'identification reliant chaque éolienne à l'éolienne dans le sillage modélisé de laquelle elle est,

c) une prise en compte des paramètres d'identification stockés à l'étape b) pour regrouper des éoliennes en une pluralité de sous-fermes,

d) une détermination d'au moins un point de fonctionnement de consigne, pour les éoliennes de chaque sous-ferme, par une méthode d'optimisation de la puissance générée par chaque sous-ferme

e) une application dudit point de fonctionnement de consigne aux éoliennes.

[Fig 8]

EP 4 733 578 A1

## Description

### Domaine technique

La présente invention concerne le domaine du contrôle d'une ferme d'éoliennes pour maximiser la puissance produite et pour réduire la fatigue des éoliennes.

Une ferme d'éoliennes, également appelé parc éolien ou centrale éolienne est un site regroupant une pluralité d'éoliennes produisant de l'électricité. Ce site peut être sur terre ou en mer. On distingue ainsi des fermes éoliennes terrestres et des fermes éoliennes « offshore », c'est-à-dire en mer.

Les éoliennes de ces fermes sont généralement des éoliennes à axe de rotation horizontal qui disposent d'un système pour orienter l'axe de rotation horizontal dans le sens de la direction du vent, afin de maximiser l'énergie récupérée par l'éolienne. Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite éventuellement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine (modulateur, commande, multiplicateur, générateur, ...). La nacelle peut tourner pour orienter le rotor dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;

- éventuellement une transmission, composée notamment de deux axes (arbre mécanique du rotor et arbre mécanique de la machine électrique) reliés par un multiplicateur (boîte de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes et des fermes d'éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les chargements extrêmes de la structure (pales, mât et plate-forme).

### Technique antérieure

Les fermes d'éoliennes sont sujettes à un phénomène communément appelé «effet de sillage», lorsque les perturbations créées par les turbines situées en amont du parc éolien créent des conditions de production d'électricité sous-optimales pour les autres turbines. En effet, en aval de l'éolienne un sillage tourbillonnaire se forme, et dans ce sillage, la vitesse moyenne du vent est diminuée car l'éolienne a capté une partie de l'énergie cinétique du vent, et l'intensité de turbulence est augmentée. (On comprend « amont » et « aval » le positionnement d'une éolienne par rapport aux autres éoliennes selon la direction du vent dominant à un instant donné.)

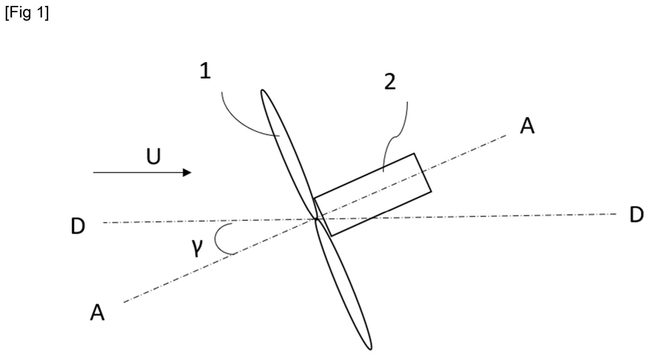

Une stratégie connue pour maximiser la production d'énergie d'une éolienne consiste à orienter son rotor afin que celui-ci soit face au vent. L'angle entre le rotor et la direction du vent, appelé angle de désalignement ou encore lacet (« yaw » en anglais), est alors de 0°. La figure 1 illustre schématiquement et de manière non limitative l'angle de désalignement. La figure 1 est une vue de dessus d'une éolienne. L'éolienne comprend des pales 1 et une nacelle 2, orientées selon une direction AA. Le vent est représenté par la flèche U, ayant une direction DD. L'angle $\theta$ entre la direction AA et la direction DD est l'angle de désalignement. Lorsque la turbine de l'éolienne est alignée avec la direction du vent, cet angle $\theta$ est nul.

Dans les parcs éoliens, cependant, appliquer cette stratégie (angle de désalignement $\theta$ nul) à toutes les turbines, selon une méthode dite « gloutonne », rend le parc sujet à ce qu'on appelle l'effet de sillage : lorsqu'une éolienne extrait de l'énergie du vent, la vitesse du vent en aval diminue et sa turbulence augmente. Cela conduit à des conditions sous-optimales pour la production d'énergie des turbines situées en aval, les pertes en production totale pouvant atteindre les 40% en mer.

Un certain nombre d'actionneurs contrôlables peuvent être utilisés pour réduire cet effet : la capture de puissance peut être influencée en contrôlant l'orientation des pales ou le couple du générateur, le sillage d'une turbine peut être dévié sous les turbines en aval en inclinant le plan du rotor, ou sur le côté en modifiant le lacet, selon une technique connue sous le nom anglais de « wake steering » (redirection de sillage). La redirection de sillage est une stratégie de contrôle à l'échelle de la ferme d'éoliennes qui maximise généralement la production totale d'énergie en coordonnant les interactions entre les éoliennes. Contrairement aux stratégies de contrôle standard qui visent à maximiser la performance des éoliennes individuelles, la redirection de sillage sacrifie la production d'énergie de certaines éoliennes pour obtenir une meilleure performance nette pour l'ensemble de la ferme d'éoliennes.

En complément de la maximisation de la production, on peut aussi chercher à limiter ou diminuer la fatigue structurelle des éoliennes. C'est un compromis additionnel entre le gain de production, l'impact négatif en termes de chargement des éoliennes lié au désalignement, et l'impact positif de la redirection du sillage hors des rotors des éoliennes situées en aval des éoliennes désalignées. Une conséquence positive, en cas de compromis avantageux, est l'augmentation de la durée de vie des éoliennes et la diminution des coûts de maintenance, en plus du gain de production obtenu.

Une stratégie consiste donc à utiliser les actionneurs de lacet pour désaligner les turbines par rapport à la direction du vent incident : cela permet une redirection des sillages pour limiter l'impact sur les turbines en aval. Trouver les angles de lacet optimaux (qui maximisent la puissance électrique totale de la ferme d'éoliennes tout en limitant ou réduisant la fatigue des éoliennes) est un problème complexe : l'optimisation de la puissance annuelle d'une ferme d'éoliennes nécessiterait, en temps réel, une puissance de calcul importante, voire rédhibitoire quand la ferme est de grande taille, c'est-à-dire quand elle comprend un nombre élevé d'éoliennes (par exemple au moins 30 ou au moins 50 ou au moins 80 éoliennes, cette considération pouvant dépendre des capacités de calcul disponibles).

Beaucoup d'études ont porté sur la prise en compte des sillages des éoliennes pour les piloter.

Il est par exemple connu du brevet EP4382743 correspondant à la demande de brevet US 2024/0183337 un procédé de contrôle d'une ferme d'éoliennes, dans lequel on met en œuvre de manière décentralisée, pour chaque éolienne, une méthode d'apprentissage par renforcement, pour laquelle la récompense est calculée en fonction d'un temps de propagation du sillage (la récompense est une valeur d'une fonction récompense d'une méthode d'apprentissage automatique par renforcement). Ainsi, la récompense est représentative de l'effet de la dernière action (par exemple le contrôle du lacet antérieur).

Des études ont porté plus précisément, également, sur la dynamique des éoliennes à travers le temps : Ainsi, Bernardoni et al. (F. Bernardoni, U. Ciri, M. Rotea et S. Leonardi, « Real-time identification of clusters of turbines », Journal of Physics: Conference Series, t. 1618, p. 022 032, sept. 2020. doi : 10.1088/ 1742-6596/1618/2/022032) considèrent les séries temporelles des puissances fournies par chaque éolienne : Ils établissent d'abord une simulation numérique d'une ferme éolienne à l'équilibre, soumise à un vent de référence. Ensuite, ils augmentent la vitesse du vent en face d'une éolienne i et établissent le délai $\tau$ de propagation de cette perturbation jusqu'à l'éolienne j. Cela leur permet d'étudier la corrélation entre la série des puissances de i et la série des puissances de j, décalée d'un délai $\tau$. Enfin, la classification des éoliennes est faite selon la valeur de ce coefficient de corrélation.

Quant à G. M. Starke et al. (G. M. Starke, P. Stanfel, C. Meneveau, D. F. Gayme et J. King, « Network based estimation of wind fiarm power and velocity data under changing wind direction », in 2021 American Control Conference (ACC), IEEE, 2021, p. 1803-1810), ceux-ci considèrent d'abord un système dynamique discret où l'état du système à l'instant k est une matrice $((\Phi k)j)$ qui résume les déficits de vitesses que l'éolienne i subit de la part de l'éolienne j. A partir de la valeur à jour de $\Phi k$, les auteurs déterminent un coefficient kw qui servira à la modélisation géométrique du sillage. En effet, la ferme éolienne est tracée dans le plan, où les éoliennes en vent libre sont identifiées grâce à un argument géométrique (les éoliennes de la ferme sont représentées en cellules de Voronoï). Puis, le sillage de i est défini comme la région du plan entre les demi-droites d'origine l'éolienne i, de coefficient directeur kw. Toutes les éoliennes dont le rotor sont dans cette zone sont considérées dans le sillage de i.

Aucune de ces deux solutions ne donne entièrement satisfaction, notamment en termes de puissance de calcul nécessaire, pour des fermes de moyenne et grande taille.

L'invention a alors pour but d'améliorer le pilotage d'une ferme d'éolienne, notamment en améliorant la façon dont on optimise la puissance qu'elle génère selon la configuration de vent, plus particulièrement en visant une optimisation peu/moins gourmande en puissance de calcul tout en restant performante.

**Résumé de l'invention**

L'invention a tout d'abord pour objet un procédé de pilotage d'une ferme d'éoliennes, lesdites éoliennes étant d'un seul type ou de différents types, chaque éolienne de ladite ferme d'éoliennes présentant au moins un point de fonctionnement dont son angle de désalignement θ et/ou son bridage, ledit ou lesdits points de fonctionnement étant réglables par au moins un actionneur. Le procédé selon l'invention comprend :

a) une étape de détermination par modélisation, pour différentes configurations de vent, d'une région de l'espace approximant le sillage de chaque type d'éolienne, région dite sillage modélisé, pour une gamme d'angle de désalignement θ donnée et pour un seuil de déficit de vitesse de vent δ donné,
b) une étape d'identification, à partir des sillages modélisés à l'étape a), des éoliennes qui sont dans le sillage modélisé d'une autre éolienne pour chacune des configurations de vent, puis de stockage de paramètres d'identification reliant chaque éolienne à l'éolienne dans le sillage modélisé de laquelle elle se trouve pour chaque configuration de vent
c) une étape, pour une configuration de vent, de prise en compte des paramètres d'identification stockés à l'étape b) pour ladite configuration de vent ou pour une configuration de vent la plus proche de celle mesurée, pour regrouper des éoliennes en une pluralité de sous-fermes, chaque sous-ferme comportant les éoliennes qui sont dans le sillage modélisé les unes des autres
d) une étape de détermination d'au moins un point de fonctionnement de consigne, dont l'angle de désalignement θ et/ou le bridage, pour les éoliennes de chaque sous-ferme, par une méthode d'optimisation de la puissance (maximisation de la puissance sous contraintes de fatigue structurelle, par exemple) générée par chaque sous-ferme
e) une étape d'application dudit ou desdits point(s) de fonctionnement de consigne déterminé à l'étape d) aux éoliennes de la ferme, dont leur angle de désalignement (θ) et/ou leur bridage, par actionnement du ou des actionneur(s).

On note que le procédé de l'invention, dans son ensemble, est avantageusement opéré en temps réel, et que les mises à jour du procédé se font en temps réel.

Le ou les actionneurs peuvent être, notamment, l'actionneur de cap de la nacelle, les actionneurs d'orientation des pales et/ou le ou les actionneurs de pilotage en couple de la génératrice électrique,

On comprend dans la présente demande par « type » d'éolienne le fait que la ferme d'éoliennes concernée peut ne comprendre qu'un seul type d'éolienne (toutes les éoliennes sont identiques, elles sont de même fonctionnement et de même dimensionnement notamment), ou que la ferme peut comprendre plusieurs types d'éolienne. Dans ce dernier cas de figure, à l'étape a) la détermination se fait pour chacun des types d'éolienne.

On comprend dans la présente demande par « angle de désalignement θ » l'angle entre le rotor et la direction du vent, appelé également « yaw » en anglais ou « lacet » en français.

On comprend dans la présente demande par « bridage » la réduction du rendement aérodynamique de l'éolienne en opération, afin par exemple de limiter sa puissance électrique convertie à un seuil déterminé, pour des conditions environnementales données. Cela peut se traduire par une modification de la vitesse de consigne de rotation des pales de l'éolienne et/ou une modification de l'orientation des pales, modifiant ainsi leur angle d'attaque et leur prise au vent.

On comprend dans la présente demande par « configuration de vent » les données relatives au vent, pouvant inclure la vitesse du vent, sa direction, son intensité de turbulence, voire d'autres paramètres environnementaux, comme la stabilité atmosphérique. Elle est désignée en anglais par le terme « bin ».

On comprend dans la présente invention par « sous-ferme » le regroupement des éoliennes de la ferme en une pluralité de sous-groupes contenant chacun au moins une ou au moins deux éoliennes.

On comprend dans la présente invention par « sillage » sa définition connue pour les éoliennes, à savoir la région en aval d'une éolienne (par rapport à la direction du vent), où l'écoulement de l'air est ralenti, correspondant au déficit de vitesse tel que considéré ici, avec une augmentation de son intensité de turbulence.

On comprend dans la présente invention par « déficit de vitesse de vent δ » le déficit de vitesse de vent produit par des sillages des éoliennes en amont de l'éolienne considérée.

L'essence de l'invention a ainsi été de découper la ferme en une pluralité de sous-fermes qui regroupent chacune les éoliennes qui sont en interaction aérodynamique les unes avec les autres, en temps réel,

- en modélisant l'enveloppe union de tous les sillages (c'est-à-dite des zones de déficit de vitesse) correspondant à toutes les consignes de désalignement applicables pour un état de vent donné en amont de l'éolienne considérée
- en déterminant le regroupement en temps réel selon la configuration de vent mesurée, à partir des sillages modélisés.

Les différentes configurations de vent sont acquises dès l'étape a), notamment à l'aide de base(s) de données disponible(s) remise(s) à jour/réactualisé(e)s selon une fréquence de temps donnée, notamment d'au plus 15 minutes, de préférence d'au plus ou égale à 10 minutes. On a notamment recours à un système de contrôle et d'acquisition de données en temps réel (connu sous l'acronyme anglais SCADA pour « Supervisory Control And Data Acquisition »). Les données de configuration de vent ainsi acquises peuvent être complétées par des données acquises par des capteurs physiques en temps réel.

L'invention optimise alors la puissance que peut générer chaque sous-ferme, la somme de ces puissances permettant d'obtenir l'optimisation globale de la ferme, au lieu de faire cette optimisation sur la totalité des éoliennes de la ferme : cette optimisation en sous-fermes est alors bien moins gourmande en puissance de calcul, donc moins gourmande en ressources et mémoires informatiques, bien plus simple /plus rapide, sans pour autant perdre en niveau de performance. L'optimisation est donc plus rapide, car réalisée sur des sous-fermes plutôt que sur la totalité des fermes, donc avec une convergence plus rapide des calculs et parce qu'on parallélise les calculs, qui sont indépendants pour chaque sous-ferme.

L'invention permet ainsi de prendre en compte les interactions aérodynamiques entre les éoliennes pour les piloter de façon performante, avec un besoin en puissance de calcul compatible d'une part avec les fréquences de mise à jour des consignes envoyées aux éoliennes, d'autre part avec les capacités de calculs disponibles sur les unités de pilotage et de supervision de fermes éoliennes, même pour des parcs impliquant un nombre important d'éoliennes.

De préférence, au moins une partie des étapes a),b),c) d),e) sont réitérées, et de préférence toutes les étapes b), c), d) et e) sont réitérées à chaque nouvelle configuration de vent. Ainsi, avec l'invention, on peut reconfigurer à chaque mesure de vent la façon dont on regroupe les éoliennes en sous-fermes : on a affaire à un pilotage dynamique, en temps réel.

Le rafraichissement de l'ensemble du procédé de pilotage peut être cadencé à des périodes de l'ordre de la minute, pouvant varier notamment entre 30 secondes et 10 minutes, voire des périodes plus longues en cas de prise en compte se focalisant sur des phénomènes d'écoulement de grande taille et se propageant au sein de grandes fermes.

L'étape a) de détermination des sillages modélisés peut être réalisée pour une gamme d'angle de désalignement comprise entre $-\theta$ et $+\theta$, ces valeurs correspondant aux limites définies dans les spécifications des éoliennes, avec notamment $\theta$ égal à 20°.

Dans l'étape a), chaque sillage modélisé pour la gamme d'angle de désalignement $\theta$ peut être l'enveloppe de la somme d'une pluralité de sillages modélisés à différentes valeurs d'angle de désalignement dans ladite gamme d'angle de désalignement $\theta$, et notamment l'enveloppe des sillages modélisés à $-\theta$, à $+\theta$ et à 0°. En effet, les sillages modélisés aux valeurs d'angle de désalignement maximum et à angle de désalignement nul tendent à se chevaucher partiellement, l'enveloppe du regroupement des trois sillages permettant d'avoir un sillage modélisé particulièrement représentatif du sillage réel d'une éolienne dans ses limites de fonctionnement.

L'étape a) de détermination des sillages modélisés peut être réalisée pour un seuil de déficit de vitesse de vent $\delta$ compris entre 0,75 m/s et 0,20 m/s, notamment entre 0,70 m/s et 0,45 m/s, et notamment égal à 0,65 m/s. En effet, la définition même du sillage correspond à une région en aval de l'éolienne (par rapport à la direction du vent) dont la vitesse de vent est moindre que celle du vent libre (c'est-à-dire dont l'écoulement n'est pas perturbé par l'éolienne considérée). Choisir un déficit de vitesse de vent approprié permet, notamment, de modéliser des sillages de tailles suffisamment restreintes, notamment en largeur, pour que les sous-fermes soient avantageusement délimitées, sans interaction entre des sillages modélisés de deux éoliennes de deux sous-fermes adjacentes.

L'étape a) de détermination des sillages modélisés est réalisée pour un seuil de déficit de vitesse de vent $\delta$ prenant en compte au moins un des paramètres suivants : le nombre d'éoliennes de la ferme, la distance entre éoliennes, la configuration de la ferme, le positionnement géographique des éoliennes dans la ferme, la rose des vents.

Ainsi le seuil $\delta$ peut être déterminé selon une méthode d'hyper-paramétrage prenant en compte plusieurs éléments environnementaux, de conception des éoliennes et opérationnels.

Dans l'étape a), les sillages modélisés peuvent être approximés/représentés sous forme de représentations en deux dimensions, en considérant les configurations de vent et les sillages à hauteur constante, notamment une hauteur égale celle de l'axe du rotor portant les pales des éoliennes : ces sillages modélisés ont alors une forme de type trapèze dont la plus petite base est la largeur initiale du sillage.

Dans l'étape a), les sillages modélisés peuvent alternativement être approximés/représentés sous forme de représentations à trois dimensions. Il peut s'agir de représentations de type portion de cône dont la plus petite base est la taille initiale du sillage. On considère alors les configurations de vent et les sillages sur une hauteur donnée, notamment dans une zone de part et d'autre de la hauteur de la cote du rotor de l'éolienne.

Mais on peut aussi choisir des représentations en trois dimensions de type pseudo-cônes, avec une section plus ovale que ronde, voire une section qui n'est ni ovale ni ronde, ce qui peut notamment être le cas pour les fermes d'éoliennes flottantes.

Les différentes configurations de vent considérées pour réaliser l'étape a) de détermination par modélisation des sillages peuvent être l'ensemble des configurations de vents possibles relevées sur une période de temps donnée, notamment sur une année, dans une zone géographique comprenant la ferme d'éoliennes.

Dans l'étape b), les configurations de vent, notamment la distribution de la vitesse et de la direction du vent et/ou la vitesse et la direction du vent, peuvent être mesurées en temps réel au moyen d'au moins un capteur LiDAR et/ou d'au moins un système de mesure anémométrique (sonique ou mécanique) fournissant vitesse et direction du vent et/ou d'au moins un système de contrôle et d'acquisition de données. Ces différents moyens de mesure peuvent être fixés à l'éolienne, notamment au voisinage des nacelles, ou être déportés (par exemple, pour une ferme d'éoliennes en mer offshore, être montés sur des bouées flottantes.

Dans l'étape d) de détermination d'au moins un point de fonctionnement de consigne, l'optimisation de la puissance générée par sous-ferme peut être réalisée pour chacune des sous-fermes en parallèle et/ou en séquentiel.

Dans les deux cas de figure (calculs en parallèle ou en séquentiel), l'optimisation est bien plus rapide et bien moins gourmande en ressources de calcul/ressources informatiques qu'un travail d'optimisation sur toutes les éoliennes de la ferme à la fois, ceci à la fois parce que la simulation de la production est moins couteuse en calculs avec moins de turbines et parce que l'algorithme d'optimisation est utilisé dans un espace de dimensions plus faible (l'espace à explorer est plus réduit).

L'optimisation en parallèle sera encore plus rapide que l'optimisation en séquentiel, quand elle est possible.

Dans l'étape d) de détermination d'au moins un point de fonctionnement de consigne, l'optimisation de la puissance générée par sous-ferme peut être réalisée en prenant en compte les contraintes de fatigue structurelle des éoliennes ou de chaque type d'éolienne de la ferme. Ces contraintes concernent particulièrement les pales et le mat de chaque type d'éolienne et sont généralement à prendre en compte dans le pilotage de la ferme.

Il est à noter que la prise en compte de ces contraintes de fatigue tend à augmenter le temps de calcul pour l'optimisation, l'invention est donc particulièrement intéressante, car elle permet cette prise en compte en modérant l'augmentation du temps de calcul.

La fatigue structurelle telle qu'on la comprend dans la présente invention peut concerner tout composant mécanique de l'éolienne, notamment le mat, les pales, la fondation, le support flottant, les lignes d'amarrage. Par extension, la sollicitation mécanique des actionneurs peut également être considérée comme une contrainte, au même titre que la fatigue structurelle.

L'étape a) de détermination des sillages modélisés peut être réalisée hors ligne avec éventuelle(s) mise(s) à jour périodique(s) et/ou éventuelle mise à jour avec la mesure de configuration de vent faite en temps réel dans l'étape c).

L'invention a également pour objet une ferme d'éoliennes, lesdites éoliennes étant d'un seul type ou de différents types, chaque éolienne de ladite ferme d'éoliennes présentant au moins un point de fonctionnement réglable, dont son angle de désalignement $\theta$ et/ou son bridage, ledit ou lesdits points de fonctionnement étant réglables par au moins un actionneur, telle que ladite ferme d'éoliennes comprend ou est connectée à des moyens informatiques pour mettre en œuvre le procédé de pilotage décrit plus haut, afin d'appliquer des points de fonctionnement de consigne aux éoliennes de la ferme dont leur angle de désalignement $\theta$ et/ou leur bridage, en actionnant leurs actionneurs (selon les consignes déterminés par lesdits moyens informatiques).

Il est préférable que ces moyens de calcul/ces moyens informatiques soient hébergés sur le site même de la ferme d'éoliennes. Il est cependant également possible de les déporter (en tout ou partie) hors du site de la ferme d'éoliennes, tant qu'ils peuvent être connectés à la ferme d'éoliennes par un réseau de communication performant (internet..).

L'invention a également pour objet tout moyen informatique, notamment un ordinateur, serveur ou calculateur configuré pour mettre en œuvre le procédé de pilotage d'une ferme d'éoliennes décrit plus haut.

L'invention a également pour objet tout produit programme d'ordinateur téléchargeable depuis un réseau de communication et/ou enregistré sur un support lisible par un ordinateur, un serveur ou un calculateur et/ou exécutable par un processeur, comprenant des instructions de code de programme pour la mise en œuvre du procédé de pilotage d'une ferme d'éoliennes décrit plus haut, lorsque ledit programme est exécuté sur un ordinateur, un serveur ou un calculateur.

L'invention a également pour objet tout support de stockage lisible par ordinateur, serveur ou calculateur et stockant des instructions, qui, lorsqu'elles sont exécutées par un ordinateur, serveur ou calculateur impliquent que l'ordinateur, le serveur ou le calculateur met en œuvre le procédé de pilotage d'une ferme d'éoliennes décrit plus haut.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre l'angle de désalignement d'une éolienne.

La figure 2 représente un exemple d'histogramme des mesures annuelles de vent (vitesse et direction) sur une année, dont les données peuvent être utilisées dans le procédé selon l'invention.

La figure 3 représente le sillage d'une éolienne soumise à une configuration de vent donnée, ici à titre d'exemple un vent de vitesse vent de vitesse $w_s$ = 7 m/s et de direction $w_d$ = 270°, le dégradé de gris représentant les valeurs de vitesse selon l'échelle indiquée à la droite de la représentation du sillage qui exprime la vitesse du vent en m/s dans la zone du sillage considérée.

La figure 4 représente la valeur du champ de vitesse du vent ainsi que les puissances de deux éoliennes, dont une dans le sillage de l'autre, avec les mêmes conventions de représentation de vitesse que dans la figure précédente (mêmes conventions dans toutes les figures suivantes qui représentent des sillages).

La figure 5 représente la déflection du sillage grâce au désalignement de l'éolienne, avec en partie supérieure le sillage d'une éolienne à angle de désalignement θ nul, et en partie inférieure le sillage de l'éolienne à angle de désalignement θ de 20°.

La figure 6 représente les interactions entre les sillages de trois éoliennes regroupées en une sous-ferme, avec un pilotage de leurs désalignements par une optimisation selon l'invention de la puissance générée par la sous-ferme.

La figure 7 est un graphe représentant la durée des calculs d'optimisation de la puissance de fermes d'éoliennes simulées avec un nombre d'éoliennes croissant, avec en abscisse le nombre d'éoliennes de la ferme, et en ordonnée la durée de l'optimisation en heures.

La figure 8 représente les sillages d'une ferme de 9 éoliennes pour une configuration de vent donnée, sans le regroupement en sous-fermes selon l'invention.

La figure 9a représente les sillages d'une ferme de 9 éoliennes pour une configuration de vent donnée, et la figure 9b représente le graphe orienté de regroupement des 9 éoliennes en sous-fermes selon l'invention correspondant aux sillages de la figure 9a.

La figure 10a représente les sillages d'une ferme de 12 éoliennes pour une configuration de vent donnée, et la figure 10b représente le graphe orienté de regroupement en sous-fermes des 12 éoliennes selon l'invention correspondant aux sillages de la figure 10a.

La figure 11 représente les sillages d'une éolienne, pour une configuration de vent donnée (7m/s, 270°), pour différentes valeurs de déficit de vitesse δ, qui sont respectivement, de haut en bas, égales à 0,75m/s, 0,5 m/s et 0,25 m/s.

La figure 12 représente les sillages d'une éolienne, pour une configuration de vent donnée (7m/s, 270°), pour des angles de désalignement θ qui sont respectivement, de haut en bas, égaux à +20°, 0° et -20°, pour un déficit de vitesse δ de 0,5 m/s.

La figure 13a représente un sillage dit additionnel qui correspond à l'enveloppe résultant de l'addition des sillages aux trois angles de désalignement θ de +20°, 0° et -20° de la figure 12, et la figure 13b est la modélisation selon l'invention du sillage additionnel de la figure 13a sous forme d'un trapèze

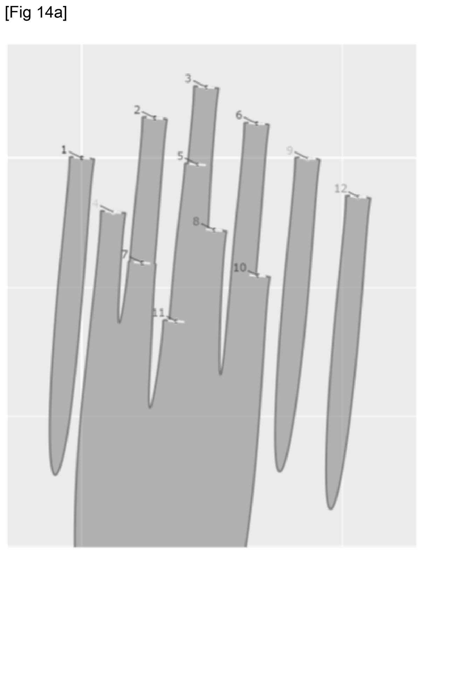

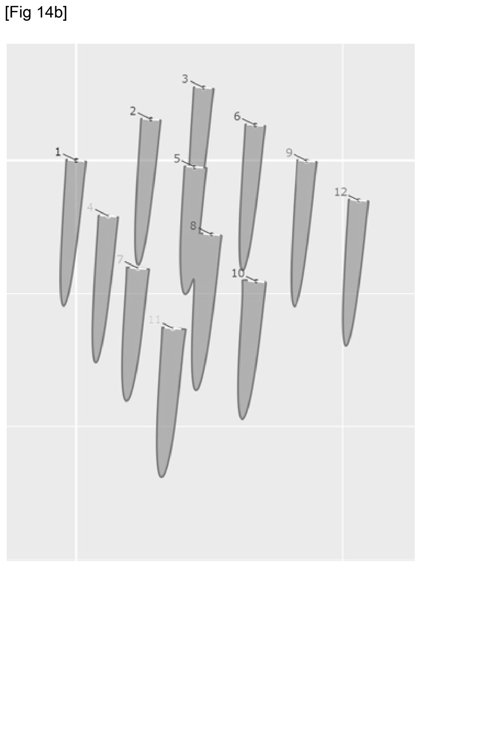

Ces deux figures représentent les sillages additionnels d'un ensemble de 12 éoliennes, selon qu'on choisit un seuil de déficit de vitesse δ de 0,5 m/s (figure 14a) ou de 1,5 m/s (figure 14b).

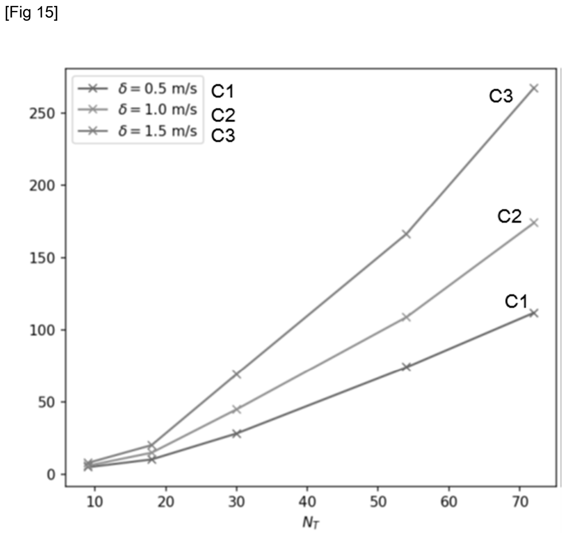

La figure 15 représente un graphe, avec en abscisse, le nombre d'éoliennes de la ferme et en ordonnée le ratio de la durée d'optimisation « classique » sur la durée d'optimisation par regroupement, dit aussi « clustering » en anglais, selon l'invention, pour différentes valeurs de seuil de déficit de vitesse δ .

L'ensemble des figures, notamment des éoliennes et de leur sillage, reste très schématique, pas nécessairement à l'échelle ni dans la configuration spatiale réelle des éoliennes en position de fonctionnement (les tendances, ordres de grandeurs et variation des quantités d'intérêt restant néanmoins représentatives de la réalité de la mise en œuvre de l'invention).

## Description des modes de réalisation

La présente invention concerne un procédé de contrôle en temps réel d'une ferme d'éoliennes.

Une ferme d'éoliennes, également appelé parc éolien ou centrale éolienne est un site regroupant une pluralité d'éoliennes produisant de l'électricité. Chaque éolienne (également appelée par abus de langage turbine) de la ferme d'éoliennes comprend au moins un actionneur pour modifier au moins un point de fonctionnement de l'éolienne. Un exemple de point de fonctionnement peut être l'angle de désalignement θ (ou lacet, de l'anglais « yaw ») de l'éolienne.

D'autres points de fonctionnement peuvent être notamment le bridage de l'éolienne, ou la modification de la courbe de puissance de l'éolienne. La position des éoliennes au sein de la ferme d'éoliennes, appelée également agencement des éoliennes ou implémentation des éoliennes, est préalablement connue.

Dans la suite de la description, seul le contrôle/le pilotage de l'angle de désalignement θ est décrit et exemplifié. Toutefois d'autres points de fonctionnement peuvent être contrôlés par le procédé selon l'invention, en plus ou à la place de l'angle de désalignement, notamment le bridage statique, dynamique ou hélicoïdal impactant l'étendue et l'advection du sillage. Pour plus de détails sur le bridage dynamique, on peut se reporter, par exemple à l'article « Periodic dynamic induction control of wind farms : proving the potential in simulations and wind tunnel experiments » de J.A. Frederik and al, publiée en aout 2019 dans la publication Wind Energy Science Discussions.

Pour plus de détails sur le bridage hélicoïdal, on peut se reporter, par exemple, à l'article «The helix approach : using dynamic individual pitch control to enhance wake mixing in wind farms », de J.A Frederik and al, publié en aout 2020 dans la publication Wind Energy, issue 08, pages 1739-1751.

Dans la présente demande, les termes amont et aval sont définis selon la direction du vent (une éolienne en amont est soumise au vent avant une éolienne située en aval).

Le procédé selon l'invention comprend les étapes suivantes :

a) une étape de détermination par modélisation, pour différentes configurations de vent, d'une région de l'espace approximant le sillage de chaque type d'éolienne, région dite sillage modélisé, pour une gamme d'angle de désalignement (θ) donnée et pour un seuil de déficit de vitesse de vent (δ) donné,
b) une étape d'identification, à partir des sillages modélisés à l'étape a), des éoliennes qui sont dans le sillage modélisé d'une autre éolienne pour chacune des configurations de vent (mesurées), puis de stockage de paramètres d'identification reliant chaque éolienne à l'éolienne dans le sillage modélisé de laquelle elle se trouve pour chaque configuration de vent
c) une étape, en temps réel, pour une mesure de configuration de vent, de prise en compte des paramètres d'identification stockés à l'étape b) pour ladite configuration de vent ou pour une configuration de vent la plus proche de celle mesurée, pour regrouper des éoliennes en une pluralité de sous-fermes, chaque sous-ferme comportant les éoliennes qui sont dans le sillage modélisé les unes des autres
d) une étape de détermination d'au moins un point de fonctionnement de consigne, dont l'angle de désalignement (θ) et/ou le bridage, pour les éoliennes de chaque sous-ferme, par une méthode d'optimisation de la puissance générée par chaque sous-ferme
e) une étape d'application dudit ou desdits point(s) de fonctionnement de consigne déterminée à l'étape d) aux éoliennes de la ferme, dont leur angle de désalignement θ et/ou leur bridage, par actionnement du ou des actionneur(s).

Les étapes du procédé, ou au moins certaines d'entre elles, peuvent être mises en œuvre par des moyens informatiques, notamment au moins un ordinateur, processeur(s) ou calculateur(s).

Les étapes sont détaillées ci-après, à l'aide des figures. La figure 1 a déjà été décrite.

On rappelle tout d'abord les définitions de certains termes utilisés dans la présente demande :

- La puissance d'une ferme d'éolienne :
Le rotor d'une éolienne convertit l'énergie mécanique contenue dans le vent en énergie électrique. La relation entre la puissance $P_{eolienne}$ produite par une éolienne et celle contenue dans le vent reçu $P_{vent}$ s'écrit

$$P_{eolienne} = C_p \times P_{vent}, \text{ où } P_{vent} = \tfrac{1}{2} \rho \, SU^3$$

avec

$C_p < 0{,}593$, le coefficient de puissance de l'éolienne. Cp dépend des caractéristiques intrinsèques à l'éolienne, ainsi que de ses conditions opérationnelles, et exprime l'efficacité de la conversion de l'énergie du vent en énergie électrique
$\rho$ la densité de l'air
S la surface du secteur du vent en contact avec les pales
$U$ la vitesse du vent à la position du rotor
Une configuration de vent (dite « bin » en anglais) est la donnée d'une vitesse de ce vent (s), sa direction (d), et ici aussi son intensité de turbulence (TI). Une telle configuration de vent est donc notée par un couple de composantes $(w_s, w_d)$ ou un triplet $(w_s, w_d, TI)$.

Dans la suite de l'exposé, W = (Ws, Wd,TI) est la variable aléatoire qui représente un vent soufflant sur une ferme d'éoliennes. Elle est définie sur l'espace probabilisé (Ω, F, P) et à valeurs dans

$$W \subseteq \mathbb{R}^{\geq 0} \times [0, 2\pi[$$

Ses composantes sont ($w_s$, $w_d$).

Pour une ferme de $N_\tau$ éoliennes soumises à un vent $W$ E , la puissance de celle-ci est égale à la somme des puissances P(t) des éoliennes qui la composent :

$$P(W) = \sum_{t=1}^{N_T} P^{(t)}(W)$$

- La production d'énergie annuelle

Elle est aussi connue sous le terme AEP (qui est l'acronyme en anglais pour « average Annual Energy Production » ). L'AEP d'une ferme éolienne est définie comme l'énergie annuelle qu'elle produit annuellement. Dès lors que P décrit une quantité d'énergie fournie par heure, l'AEP s'écrit en utilisant l'espérance de production annuelle

$$\mathrm{AEP} \quad [\mathrm{kWh}] = 8760 \cdot \mathbb{E}[P(W)]$$

La constante 8760 correspond au nombre d'heures dans l'année, l'AEP s'exprimant en kWh.

Pour des raisons de simplicité, on limite le nombre de configurations de vent qui sont à étudier par année en fixant les valeurs que peut prendre W. Pour l'année sur laquelle on étudie la production d'énergie, on dispose de mesures de vent grâce auxquelles on modélise $W$ comme variable discrète. On détermine sur la base de ces mesures les probabilités de chacun de ces vents possibles. On a donc :

- l'ensemble discret des vitesses de vent possibles, comme $W_s = \{s_0, \dots, s_m\}$ où $s_0 := 0 \leq s_1 < \dots < s_m < \infty := s_{m+1}$
- l'ensemble discret des directions de vent possibles comme $W_d = \{d_0, \dots, d_n\}$ où $d_0 := 0 \leq d_1 < \dots\ d_n < 2\pi := d_{n+1}$

L'ensemble des vents possibles est donc

$$\widetilde{\mathcal{W}} = \left\{ (s_i, d_j) \right\}_{\substack{0 \leq i \leq m \\ 0 \leq j \leq n}}$$

que l'on réindice comme $\{w_1, \dots, w_{Nw}\}$,

de cardinal $N_w := m \cdot n$.

On peut donc écrire la loi de W :

$$\mathbb{P}_W = \sum_{k=1}^{N_w} p_{w_k} \delta_{w_k}$$

On suppose maintenant que l'on dispose d'un ensemble D de N mesures des valeurs de W pendant l'année d'intérêt. Un choix naturel pour les $\{p(w_{si}, w_{dj})\}$ est la proportion d'éléments de D appartenant à [si, si+1[ × [dj , dj+1[.

Plus précisément, pour $(s_i, d_j) \in \tilde{W}_s \times \tilde{W}_d$, on définit

$$p_{(s_i, d_j)} = \frac{1}{N} \left| \left\{ (w_s, w_d) \in \mathcal{D}: \quad w_s \in [s_i, s_{i+1}[, w_d \in [d_j, d_{j+1}[ \right\} \right|$$

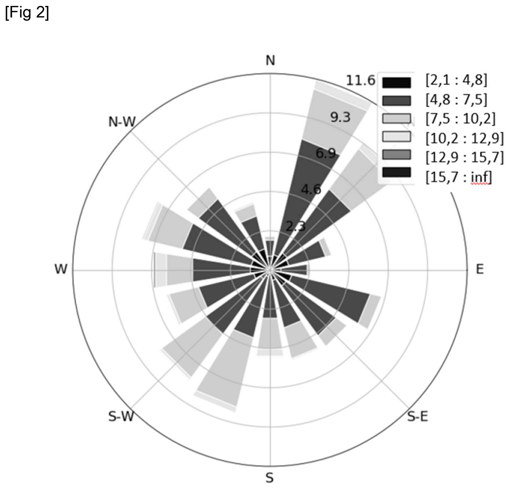

La figure 2, à titre d'exemple, pour une ferme fictive, représente la rose des vents des données de vent récoltées pendant l'année 2021 à un emplacement déterminé.

On collecte donc ces différentes configurations de vent, ici sur une année, pour définir les sillages modélisés correspondants de l'étape a) du procédé selon l'invention.

La discrétisation choisie ici, pour la rose des vents de la figure 2, est W = {0m/s, 1m/s, ... , 20m/s}×{0°, 10°, . . . , 350°}.

Cette figure est en fait un histogramme où le rayon d'une "boîte" indique la fréquence $p(s_i,d_j)$ du vent $(s_i, d_j)$ possible, la nuance de gris indiquant la vitesse si de celui-ci et l'orientation indique la direction dj.

Par convention, la direction $w_d$ est celle dont provient le vent. Elle est mesurée dans le sens des aiguilles d'une montre, avec le vent du Nord à 0°.

Maintenant que la distribution de W a été construite sur les données d'une année d'intérêt, on peut réécrire l'AEP comme suit :

$$\text{AEP} \quad [\text{kWh}] = 8760 \cdot \sum_{i=1}^{N_w} p_{w_i} P(w_i)$$

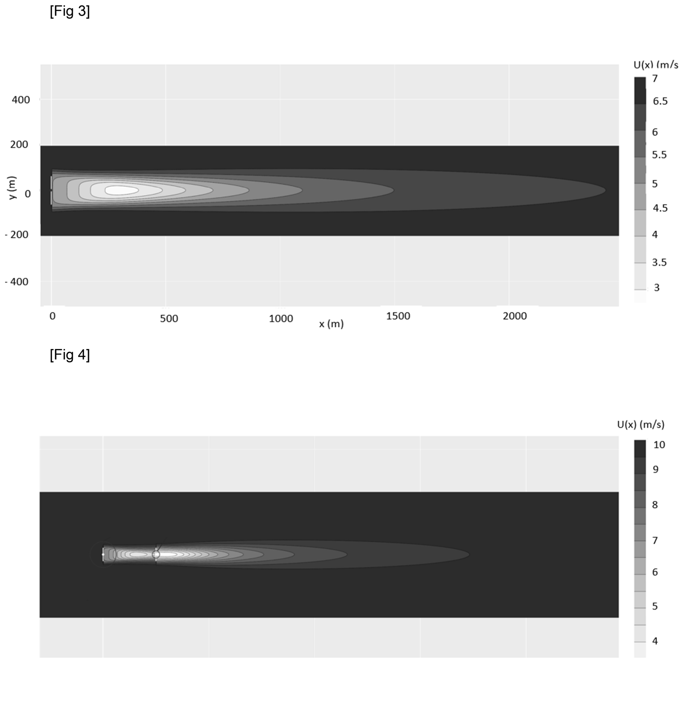

Le calcul de la puissance de chaque éolienne prend en compte l'interaction aérodynamique entre les différentes turbines. Un de ces effets d'interaction est le sillage d'une éolienne, dont une simulation est donnée en figure 3. Plus le déficit de vitesse est important, plus la nuance de gris de la représentation est claire (même convention sur les figures suivantes concernées).

- Le sillage (« wake » en anglais)

C'est la région d'écoulement perturbé en aval d'un objet solide autour duquel s'écoule un fluide. Dans le contexte de la présente invention, c'est la région en aval d'une éolienne où l'écoulement de l'air est ralenti et souvent turbulent.

A titre d'illustration, la **figure 4** représente la valeur du champ de vitesse du vent ainsi que les puissances de deux éoliennes, dont une dans le sillage de l'autre, selon une représentation de même type que la figure 3.

Les éoliennes qui sont dans un sillage opèrent donc dans une région où la vitesse du vent est moindre que celle du vent libre (c'est-à-dire le vent dont l'écoulement n'est pas perturbé). La puissance du vent que reçoit une éolienne dans un sillage est moindre, celle-ci produira donc moins d'énergie,

- Le déficit de vitesse de vent δ

On définit le déficit de vitesse du vent en un point x de l'espace R3 comme étant $\Delta U(x) = U_\infty - U(x)$ , où $U_\infty$ est la vitesse du vent libre (en amont de la ferme) et U(x) la vitesse du vent x.

Dans les modes de réalisation détaillés dans la présente demande, les valeurs de vitesses de vent seront mesurées au niveau des nacelles des éoliennes. De même, toutes les modélisations d'éoliennes ainsi que les figures qui en découlent sont faites à cote égale à la hauteur du rotor des éoliennes. L'étude se porte donc dans un plan parallèle au sol, de côte z = $z_{rotor}$, dans un espace en 2D (en deux dimensions).

Mais il est à souligner que l'invention peut s'appliquer aussi avantageusement en s'appuyant sur des mesures et/ou des modélisations de sillage en 3D (en trois dimensions).

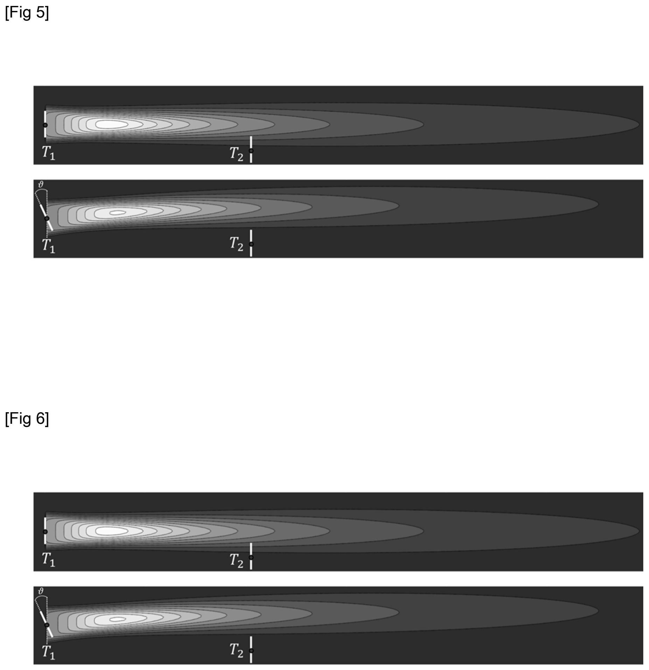

Afin de convertir le plus efficacement possible l'énergie présente dans le vent en énergie électrique, les pales d'une éolienne doivent faire face au vent. En effet, si le rotor d'une éolienne est désaligné d'un angle θ par rapport au vent (voir la figure 5, schéma du bas, comparativement au schéma du haut), le coefficient de puissance Cp d'une éolienne décroît selon la relation

$$C_p(\theta) \propto \cos^\alpha(\theta), \qquad \theta \in [-\pi, \pi], \ 1 < alpha < 3$$

Cependant, le fait de désaligner la nacelle d'une éolienne modifie son sillage. Ainsi, une éolienne qui était dans le sillage d'une autre peut se retrouver, après désalignement, en vent libre, comme on peut le voir des Figures 4 et 5.

On peut introduire des désalignements volontaires afin de diminuer le déficit de vitesse des éoliennes en aval du vent et donc d'augmenter la puissance qu'elles produisent.

- L'angle de désalignement (ou lacet ou « yaw » en anglais) et optimisation

Une valeur de lacet $\theta$ = 0 diminue $C_p$, mais peut augmenter la vitesse U reçue par l'éolienne. Ce désalignement peut faire augmenter la puissance fournie par l'éolienne.

Des calculs d'optimisation du lacet de chacune des éoliennes sont donc nécessaires afin de compenser la baisse du coefficient de puissance $C_p$ par l'augmentation des vitesses du vent reçues.

Dans l'invention, on prend en compte la dépendance de la puissance d'une ferme en les valeurs du lacet $\theta_t$ de chaque éolienne $t$. Pour une configuration de vent w, on note $\theta_t(w)$ [ $-\pi, \pi$] le lacet correspondant choisi et on écrit la puissance de la ferme

$$P = P(\theta, w).$$

Le problème d'optimisation de la puissance annuelle d'une ferme éolienne en fonction des lacets est formalisé ci-après : On considère une ferme qui contient $N_T$ éoliennes, chacune représentée par un indice $i \in \{1, \dots, N_T\}$. Pendant l'année d'intérêt, la variable aléatoire vent $W$ prend les valeurs $w_1, \dots, w_{N_W}$ avec les probabilités $p_{w_1}, \dots, p_{w_{N_W}}$.

On a fait l'hypothèse qu'à chaque vent $w_i$ ne correspond le choix que d'un seul vecteur de lacets $\theta^i$. En effet, le but sur le terrain est de choisir les désalignements des nacelles des éoliennes de la ferme à chaque nouvelle mesure de vent.

On maximise la fonction

$$[-\pi, \pi]^{N_T \times N_w} \longrightarrow \mathbb{R}_{\geq 0}$$

$$(\theta^1, \dots, \theta^{N_w}) \longmapsto \mathrm{AEP}(\theta^1, \dots, \theta^{N_w}) = 8760 \cdot \sum_{i=1}^{N_w} p_{w_i} P(\theta^i, w_i)$$

En pratique, on souhaite limiter l'amplitude du désalignement afin de limiter l'endommagement des éoliennes lors des rotations successives aux changements de vents : on peut par exemple se limiter à des amplitudes de lacet comprises entre les valeurs θ- = -20° et θ+ = 20°.

Le problème d'optimisation de la puissance annuelle moyenne de la ferme s'écrit donc comme :

$$\underset{\theta^1, \dots, \theta^{N_w}}{\arg\max} \quad \sum_{i=1}^{N_w} p_{w_i} P(\theta^i, w_i)$$

sous les contraintes θi ∈ [θ-, θ+]NT, Vi = 1, . . . , N_w

Les pwi étant positifs, on peut écrire

$$\underset{\theta^1, \dots, \theta^{N_w}}{\max} \quad \sum_{i=1}^{N_w} p_{w_i} P(\theta^i, w_i) = \sum_{i=1}^{N_w} p_{w_i} \underset{\theta^i}{\max} P(\theta^i, w_i)$$

On a réussi à séparer le problème d'optimisation en Nw problèmes indépendants en $\theta^1, \dots, \theta^{Nw}$.

Pour un bin de vent w ∈ W donné, nous cherchons à déterminer une solution appelée OPT « classique » de

$$\underset{\vartheta \in [\theta-, \theta+]^{N_T}}{\arg\max} \quad P(\vartheta, w) = \underset{\vartheta \in [\theta-, \theta+]^{N_T}}{\arg\max} \quad \sum_{t=1}^{N_T} P^{(t)}(\vartheta, w)$$

appelé OPT « classique »

Le calcul de P se fait de la façon suivante :

En notant θt la composante du vecteur des lacets et U(t) la vitesse du vent que reçoit le rotor de l'éolienne t, on peut écrire P(t) la puissance de chaque éolienne de la ferme comme

$$P^{(t)}(\theta, w) \propto C_p(\theta^t) \cdot U(t)(\theta, w)^3$$

On rappelle que w est la mesure du vent dit à l'infini, c'est-à-dire que le vent mesuré idéal dont l'écoulement n'est pas perturbé, alors que U(t) désigne la vitesse du vent réellement reçu par le rotor de l'éolienne t.

Or, il se trouve que le calcul du champ des vitesses au sein de la ferme lorsque l'écoulement de l'air est perturbé par la présence des éoliennes est très complexe et qu'on ne peut pas l'exprimer analytiquement sans faire d'approximations (il est calculé par la résolution numérique des équations de Navier-Stokes).

Pour cette raison, l'expression des P(t) dans (OPT « classique ») est inaccessible, il s'agit donc d'un problème d'optimisation dit "boîte noire".

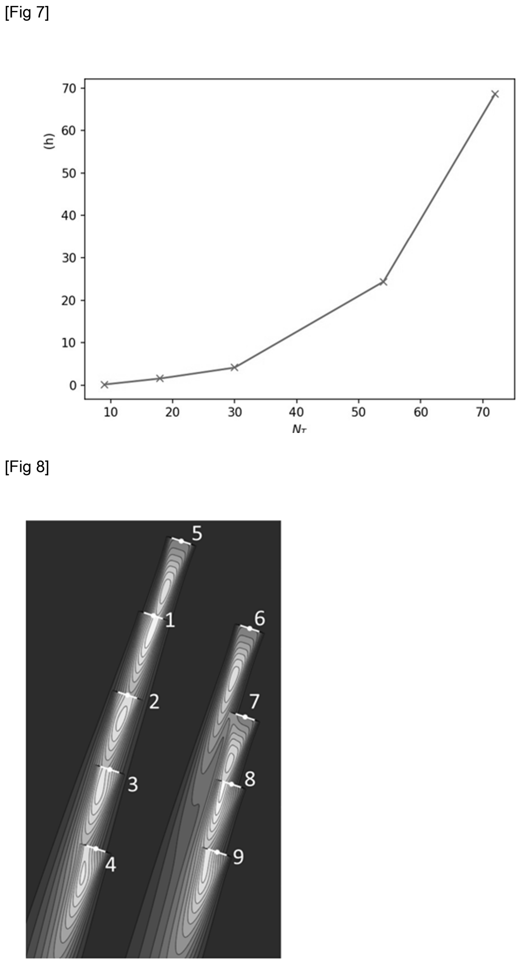

En outre, le seul calcul d'une valeur P(t) étant déjà coûteux, son optimisation numérique devient vite prohibitive lorsque la taille de la ferme augmente, comme on peut le voir de la figure 7, qui est un graphe représentant en abscisse le nombre d'éoliennes de la ferme, et en ordonnée la durée de l'optimisation en heures.

Pour ces raisons de complexité computationnelle, on suppose tout au long de ce travail l'existence d'une solution pour (OPT « classique ») dont l'éventuelle l'unicité ne sera pas abordée. Ainsi, on note :

- θ(w) le maximum renvoyé par la routine d'optimisation numérique dès lors qu'elle converge
- $P_{classique}(w) := P(θ,w)$ la puissance de la ferme obtenue par résolution numérique de (OPT »classique »)
- $t_{classique}(w)$, la durée de cette routine d'optimisation.

On a modélisé en figure 6 une ferme à 3 éoliennes soumise au vent w = (10m/s, 270°) et on a calculé sa puissance nominale $P_{nominale} = P(θ = 0,w)$ ainsi que $P_{classique} = P(θ,w)$, issue de la résolution de (OPT »classique »).

Au vu du coût de calcul de la solution de (OPT « classique »), il est impossible de mettre en œuvre l'optimisation en temps réel de la puissance d'une ferme éolienne de grande taille en fonction des angles de lacet.

La solution selon l'invention est, pour cette optimisation de puissance (étape d) du procédé selon l'invention) de découper l'instance de $(OPT_{classique})$ en plusieurs instances d'optimisation sur des groupement de données de plus petite taille :

L'invention consiste à regrouper les éoliennes de la ferme en sous-fermes, appelés « clusters », selon un critère adéquat, puis de considérer indépendamment l'optimisation de la puissance de chacune de ces sous-ferme. (On appelle aussi indifféremment dans la présente demande sous-ferme et « cluster » d'une part, et regroupement ou « clustering » d'autre part.) : c'est l'étape c) du procédé de l'invention.

Par conséquent, la puissance optimisée de la ferme par regroupement en sous-fermes devient simplement la somme des puissances optimisées pour chacune des sous-fermes.

La figure 7 évoquée plus haut permet de faire la conjecture que la durée d'optimisation de la puissance de la ferme entière est (bien) supérieure à la somme des durées d'optimisation sur chaque cluster d'éoliennes. En revanche, le fait de considérer indépendamment la puissance de chaque sous-ferme implique que l'on néglige de préférence les effets de sillage entre les sous-fermes.

Il est donc souhaitable que chaque sous-ferme capture le mieux possible les effets de sillage entre les éoliennes qui la composent. Idéalement, il est souhaité que deux éoliennes dans deux sous-fermes différentes ne soient pas dans le sillage l'une de l'autre : La figure 8 montre une situation où cela est possible, la première sous-ferme étant composée des éoliennes 1 à 4 et la deuxième sous-ferme des éoliennes 6 à 9.

Etant donné un vent w ∈ W et un clustering/regroupement $\mathcal{C} = \mathcal{C}$ (w), on définit la puissance d'un cluster/d'une sous-ferme C ∈ C en fonction des lacets des éoliennes qui le composent comme suit :

$$P^{(C)}(\vartheta, w) = \sum_{i \in C} P^{(i)}(\vartheta, w), \quad \vartheta \in [\theta^-, \theta^+]^{|C|}$$

On note que la maximisation de la puissance d'un cluster C donné en fonction des lacets n'est qu'une instance de taille réduite de (OPT « classique ») où la ferme considérée est C.

Pour chaque $C \in \mathcal{C}$ , on sait donc obtenir numériquement θ(C)(w) une solution de

$$\max_{\vartheta \in [\theta^-, \theta^+]^{|C|}} P^{(C)}(\vartheta, w)$$

, dite OPT « clustering », dont le calcul numérique aura duré t(C)(w).

Nous proposons alors le vecteur θ(C)(w) comme solution approchée de OPT « classique », composé des lacets solutions des problèmes OPT [(C)] « clustering », comme suit :

$$\forall C \in \mathcal{C}, \quad \left(\bar{\theta}^{(\mathcal{C})}\right)_{i \in C} = \bar{\theta}^{(C)}$$

En d'autres termes, le vecteur θ(C) contient les lacets issus de l'optimisation de la puissance de chaque cluster composant C.

Enfin, on définit la puissance optimisée de la ferme à l'aide du clustering C comme P$^{(C)}$clustering(w) := P(θ(C),w), et la durée de l'optimisation par clustering comme la somme des durées d'optimisation de chaque cluster, c'est-à-dire :

$$t_{\text{clustering}}^{(\mathcal{C})} = \sum_{C \in \mathcal{C}} t^{(C)}.$$

Reste ensuite à appliquer les consignes de désalignement aux éoliennes en pilotant leurs actionneurs de façon appropriée : c'est l'étape d) du procédé selon l'invention.

On peut noter que l'optimisation appliquée à chaque cluster/sous-ferme est une opération indépendante et distribuable. L'optimisation par cluster peut donc très avantageusement bénéficier de la distribution ou parallélisation des calculs, et ainsi réduire encore considérablement le temps d'exécution des calculs.

**Exemple de mise en œuvre**

On considère ici une ferme simulée de $N_T$ = 9 éoliennes soumise à un vent w = (10m/s, 18°) comme représentée sur la figure 8. Les éoliennes sont numérotées de 1 à 9 sur la figure.

Un choix possible de cluster est C = {C1,C2} où
C1 = {1, 2, 3, 4, 5} et C2 = {6, 7, 8, 9}.

Cependant, étant donné que l'éolienne 7 est à peine dans le sillage de l'éolienne 6, on peut ignorer cette interaction et choisir comme partition C' = {C'1,C'2 ,C'3}
avec C'1 = {1, 2, 3, 4, 5}, C'2 = {6} et C'3 = {7, 8, 9}.

Après la résolution numérique, on obtient les résultats suivants :

- P$_{\text{nominale}}$ = 18,87MW
- P$_{\text{classique}}$ = 20,11MW pour une durée d'optimisation t$_{\text{classique}}$ = 2,00 s
- P(C)$_{\text{clustering}}$ = 20,11MW pour une durée de calcul t(C)$_{\text{Clustering}}$ = 1,12 s
- P(C')$_{\text{clustering}}$ = 20,10MW pour une durée de calcul t(C')$_{\text{clustering}}$ = 0,96 s

Ces résultats indiquent d'abord que le choix de la partition n'est pas unique pour un vent donné, et que celle-ci reflète fidèlement les interactions de sillage entre les éoliennes qui composent les clusters/sous-fermes.

En construisant une partition adéquate pour chaque donnée de vent, on peut accélérer les calculs de puissance tout en maintenant P « clustering » proche de P « classique ».

Construction du regroupement en sous-fermes

Maintenant qu'on a défini toutes les notions lorsqu'on dispose déjà d'une partition d'une ferme éolienne, on utilise la méthode décrite plus haut pour construire le regroupement en sous-fermes :
On modélise une ferme éolienne comme un graphe orienté dont les nœuds sont ses éoliennes et les arêtes représentent la présence de sillage.

Le graphe orienté associé à une ferme de NT éoliennes soumise à un vent w est

$$G(w) = (V, E(w)),$$

où

- V = {1, . . . ,$N_T$ }
- on a la relation binaire ~ sur V × V : i ~ j si et seulement si le centre xj du rotor de l'éolienne j est dans une région Σ de l'espace correspondant au sillage en aval de l'éolienne i

$$E(w) = \big\{(i,j) \in V \times V \mid i \sim j\big\}$$

Les arêtes du graphes dépendent intégralement de la définition de Σ, la région de l'espace approximant le sillage en aval de i.

On donne un exemple de construction de la relation ~ ci-après.

On suppose ici ~ construite.

On rappelle que la caractérisation importante d'un cluster C d'éoliennes est que celui-ci capture tous les effets de sillages des éoliennes qui le composent.

Autrement dit, i et j appartiennent à C si et seulement s'il existe un chemin entre i et j sur le graphe, c'est-à-dire : $k_1, \ldots, k_n \in V$ tels que $i \sim k_1 \sim k_2 \sim \ldots \sim k_n \sim j$.

Or, il se trouve que de tels ensembles C sont exactement les composantes faiblement connexes du graphe G(w).

Par définition, un sous-graphe orienté $G = (V',E') \lhd G = (V,E)$ est une composante faiblement connexe de G s'il est le sous-graphe maximal de G tel que : $\forall u, v \in V'$, il existe un chemin non orienté de E' entre u et v.

Le problème de détermination des composantes faiblement connexes d'un graphe orienté peut ensuite être résolu, par exemple, grâce à l'algorithme BFS (acronyme pour la dénomination anglaise de cet algorithme « Breadth-First Search ») qui détermine pour chaque nœud $u \in V$ les nœuds de V qui sont atteignables à partir de u.

Une mise en œuvre de l'algorithme BFS est réalisée.

Des exemples de regroupement en sous-fermes selon l'invention sont illustrés :

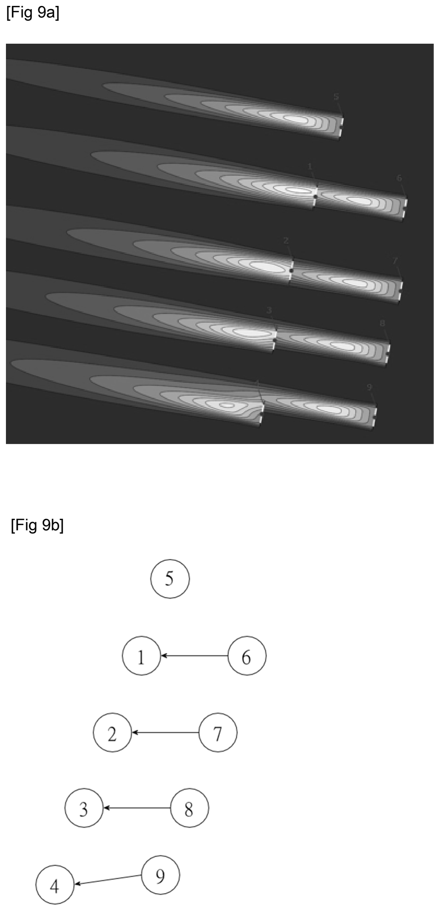

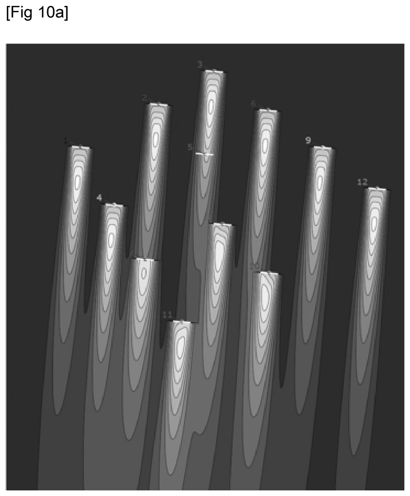

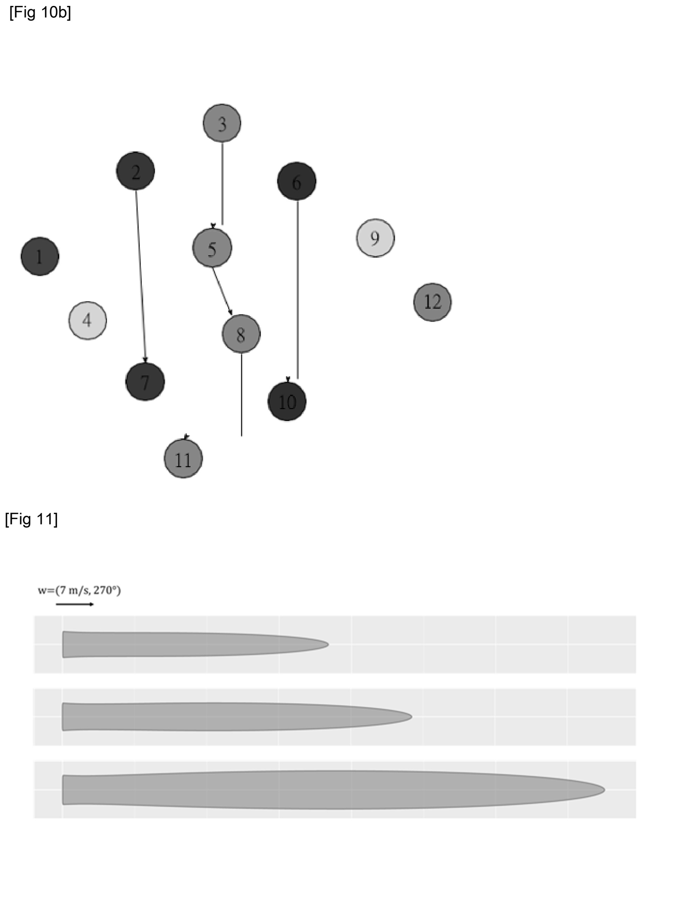

- en figures 9a et 9b pour un regroupement en sous-fermes d'une ferme de 9 éoliennes, où on a regroupé quatre sous-fermes de 2 éoliennes chacune, plus une sous-ferme ne contenant qu'une éolienne
- en figures 10a et 10b pour un regroupement en sous-fermes d'une ferme de 12 éoliennes, où l'on a regroupé les éoliennes en 4 sous-fermes ne contenant qu'une éolienne (1,4,9,12) , deux sous-ferme de deux éoliennes (2,7) et (6,10), et une sous-ferme de quatre éoliennes (3,5,8,11) .

Approximation du sillage

Comme mentionné précédemment, le sillage d'une éolienne est une région de l'espace en aval de celle-ci où l'écoulement de l'air se fait à une vitesse moindre. Le déficit de vitesse $\Delta U$ est la différence entre la vitesse du vent à l'infini (vitesse d'un vent idéal non perturbé) et cette vitesse en sillage.

Le but est, pour une donnée de vent $w \in W$, est de déterminer si l'éolienne j est dans le sillage d'une éolienne i. Pour cela, on détermine une région simple de l'espace qui approxime le sillage en aval de i. Les dimensions et l'orientation de celle-ci sont à choisir en fonction de w.

Etant donné que l'on s'intéresse à l'impact des sillages sur la production d'énergie des éoliennes, on néglige les pertes de puissances dues à des déficits de vitesse de vent faibles. En effet, la puissance produite par une éolienne étant proportionnelle au cube de la vitesse du vent reçu, des petits déficits de vitesse n'ont pas une grande influence sur la puissance fournie, d'où l'introduction du paramètre $\delta$, qui définit la valeur seuil de déficit de vitesse de vent à partir de laquelle on considère qu'il y a un sillage.

Pour une configuration de vent $w = (w_s,w_d)$, les points de l'espace qui sont dans le sillage $\Sigma$ d'une éolienne sont donc ceux auxquels la vitesse mesurée est inférieure à $w_s - \delta$ :

$$\Sigma(w, \delta) = \left\{ \mathbf{x} \in \mathbb{R}^3 \;\middle|\; U(\mathbf{x}) < w_s - \delta \right\} = \left\{ \mathbf{x} \in \mathbb{R}^3 \;\middle|\; \Delta U(\mathbf{x}) < \delta \right\}$$

La valeur de ce paramètre modifie la forme du sillage, comme on peut le voir en figure 11. On rappelle que la modélisation du sillage pour le clustering s'inscrit dans la démarche d'optimisation des lacets des éoliennes de la ferme.

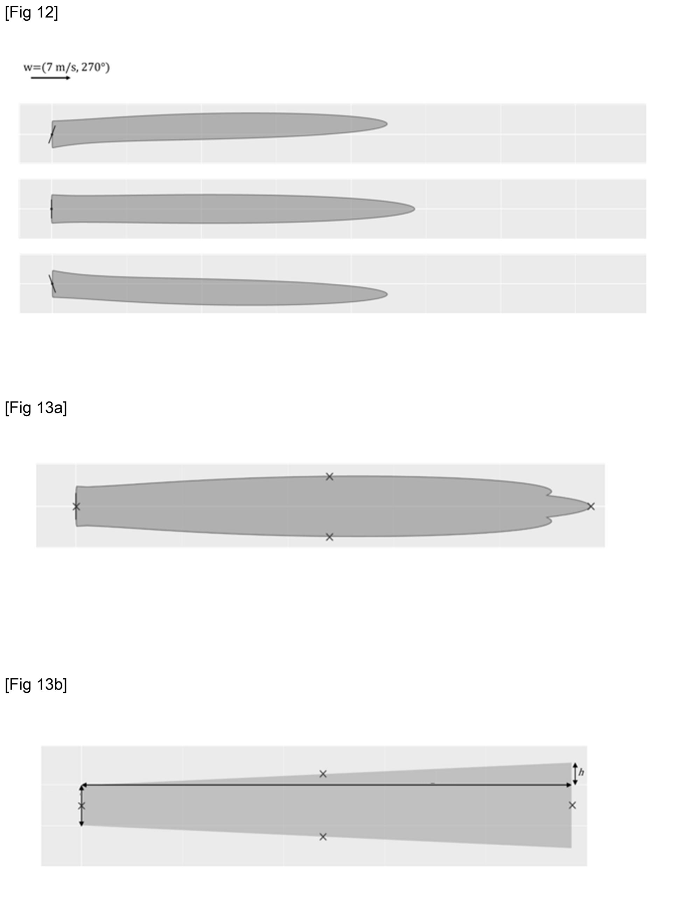

Comme évoqué plus haut, et comme on peut le voir en figure 12, le désalignement dû au lacet modifie la forme du sillage.

La modélisation de la région de sillage s'efforce de prendre en compte ces lacets. Cependant, leurs valeurs ne sont calculées par optimisation qu'après le clustering. N'ayant pas encore accès à ces valeurs à cette étape, on utilise une région de l'espace qui contiendra tous les autres sillages lorsque les valeurs de lacets varient entre $\theta$- = -20° et $\theta$+ = 20°.

Pour cela, on étudie la région

$$\widetilde{\Sigma} = \Sigma(\theta = \theta^-) \cup \Sigma(\theta = 0) \cup \Sigma(\theta = \theta^+)$$

issue de l'union des sillages à lacet 0, $\theta$- et $\theta$+, que nous représentons en figure 13a.

On voit que sommer les sillages aux lacets extrêmes de fonctionnement de l'éolienne, mais aussi à lacet nul permet d'obtenir un sillage modélisé plus proche d'un sillage réel, le sillage à lacet nul étant notamment très utile à prendre également en compte.

L' objectif est maintenant d'approximer $\tilde{\Sigma}$ par une région simple de l'espace.

Nous rappelons que toutes les vitesses et les sillages sont étudiés à hauteur constante égale à la cote du rotor z

$_{rotor}$. Par abus de notation, on garde la notation $\tilde{\Sigma}$ pour désigner $\tilde{\Sigma}$ $_à$ hauteur z = z$_{rotor}$.

On cherche donc une région simple du plan qui approxime $\tilde{\Sigma}$.

Au vu de la figure 13a et des autres simulations réalisées, on choisit un trapèze orienté comme représenté en figure 13b, selon la direction du vent, pour approximer $\tilde{\Sigma}$, qui nécessite 3 paramètres à déterminer ,

1. nb_diam : la longueur du sillage exprimée en multiples du diamètre des pales de l'éolienne
2. init_width : la largeur initiale du sillage, mesurée au niveau du rotor
3. h : l'augmentation de la largeur du demi-sillage

Une fois que ces paramètres sont déterminés pour la configuration de vent w, on approxime le sillage en aval d'une éolienne i comme le trapèze défini par ces paramètres.

Une éolienne j est alors dans le sillage de i lorsque qu'elle appartient au trapèze ainsi défini.

On retrouve avec la figure 13b le résultat illustrant l'étape a) de détermination de sillages modélisés décrite plus haut.

Calcul final pour régler le point de fonctionnement des éoliennes

C'est une approche qui procède en deux étapes :

1. En développement/ hors ligne : pour chaque configuration de vent w$_i$ = (si, di) dans l'ensemble discret des vents possibles fW, on procède de la façon suivante :

- simulation du sillage $\tilde{\Sigma}$ d'une seule éolienne soumise à un vent de vitesse w$_{si}$ et de direction w$_{di}$ =270° : c'est l'étape a) de détermination par modélisation des sillages , notamment illustrée par la figure 13b
- calcul et stockage dans une table de correspondance les paramètres de dimensions (init_width, nb_diam, h) du plus petit trapèze contenant $\tilde{\Sigma}$ : c'est l'étape b) d'identification

2. En production/ en temps réel : lorsque la ferme est soumise au vent wi,

- création d'un graphe avec les nœuds 1, . . . , N$_T$ : c'est l'étape c) de regroupement en sous-fermes, notamment illustrée par les figures 9a et 9b pour une ferme de 9 éoliennes et par les figures 10a et 10b pour une ferme de 12 éoliennes comme mentionné plus haut
- lecture des paramètres de dimensions du trapèze approximant le sillage dans la table de correspondance
- pour toute éolienne i de la ferme :

  • calcul des coordonnées du trapèze en aval de i
  • pour toute éolienne j≠i, si j est dans ce trapèze, ajouter l'arête (i, j) au graphe représentant la ferme

- calcul de C, l'ensemble des composantes faiblement connexes du graphe ainsi construit
- pour tout C E $\mathcal{C}$ , calcul numériquement de la solution θ(C)(w$_i$) du problème réduit d'optimisation (OPT(C)$_{clustering}$)
- construction du vecteur de lacets θ(C)(w$_i$) de la ferme entière
- calcul de la puissance optimisée P(C)clustering(w$_i$) = P(θ(C), w$_i$) résultant de ces désalignements : c'est l'étape d) de détermination des points de fonctionnement de consigne par optimisation de puissance de chaque sous-ferme
- puis réglage par les actionneurs du ou des points de fonctionnement des éoliennes, dont l'angle de désalignement avec les actionneurs qui les équipent, en fonction de cette puissance optimisée :

c'est l'étape e) d'application des consignes aux éoliennes via leurs actionneurs.

Les figures 14a et 14b permettent de visualiser le rôle de l'hyperparamètre δ qui fixe le seuil de déficit de vitesse à partir duquel l'approximation $\tilde{\Sigma}$ du sillage est définie. Selon la valeur de δ, on peut avoir t i ~ j ou i $\not\sim$ j , ce qui illustre l'importance du réglage de ce seuil, qui permet également d'éviter des interférences entre les sillages d'éoliennes appartenant à deux sous-fermes adjacentes.

La figure 15 représente un graphe, avec en abscisse, le nombre d'éoliennes de la ferme et en ordonnées le ratio de la durée d'optimisation « classique » sur la durée d'optimisation « clustering » selon l'invention, pour différentes valeurs de seuil de déficit de vitesse :

- la courbe C1 correspond à un seuil de déficit de vitesse $\delta$ de 0,5 m/s,
- la courbe C2 correspond à un seuil de déficit de vitesse $\delta$ de 1,0 m/s,
- la courbe C3 correspond à un seuil de déficit de vitesse $\delta$ de 1,5 m/s,

On vérifie ainsi qu'avec l'invention, le gain de temps pour opérer l'optimisation est très significatif, et qu'il est d'autant plus important que le nombre d'éoliennes de la ferme est grand.

En conclusion, on constate que l'optimisation selon l'invention, avec regroupement en sous-fermes, permet d'optimiser la production d'énergie de la ferme au moins dix fois plus rapidement que par la méthode dite classique où l'on procède à l'optimisation de puissances sur toutes les éoliennes de la ferme, avec en outre un taux d'erreur négligeable par rapport à la méthode classique, et en limitant les ressources et mémoires informatiques,.

L'invention a ainsi permis d'accélérer l'exécution des stratégies de pilotage de parc, pour permettre leur déploiement sur des calculateurs temps réel, y compris pour des fermes de grande taille, pouvant comprendre plusieurs dizaines voire plusieurs centaines d'éoliennes.

**Revendications**

1. Procédé de pilotage d'une ferme d'éoliennes, lesdites éoliennes étant d'un seul type ou de différents types, chaque éolienne de ladite ferme d'éoliennes présentant au moins un point de fonctionnement dont son angle de désalignement ($\theta$) et/ou son bridage, ledit ou lesdits points de fonctionnement étant réglables par au moins un actionneur, **caractérisé en ce que** ledit procédé comprend :

     a) une étape de détermination par modélisation, pour différentes configurations de vent, d'une région de l'espace approximant le sillage de chaque type d'éolienne, région dite sillage modélisé, pour une gamme d'angle de désalignement ($\theta$) donnée et pour un seuil de déficit de vitesse de vent ($\delta$) donné,
     b) une étape d'identification, à partir des sillages modélisés à l'étape a), des éoliennes qui sont dans le sillage modélisé d'une autre éolienne pour chacune des configurations de vent, puis de stockage de paramètres d'identification reliant chaque éolienne à l'éolienne dans le sillage modélisé de laquelle elle se trouve pour chaque configuration de vent
     c) une étape, pour une configuration de vent, de prise en compte des paramètres d'identification stockés à l'étape b) pour ladite configuration de vent ou pour une configuration de vent la plus proche de celle mesurée, pour regrouper des éoliennes en une pluralité de sous-fermes, chaque sous-ferme comportant les éoliennes qui sont dans le sillage modélisé les unes des autres
     d) une étape de détermination d'au moins un point de fonctionnement de consigne, dont l'angle de désalignement ($\theta$) et/ou le bridage, pour les éoliennes de chaque sous-ferme, par une méthode d'optimisation de la puissance générée par chaque sous-ferme
     e) une étape d'application dudit ou desdits point(s) de fonctionnement de consigne déterminé à l'étape d) aux éoliennes de la ferme, dont leur angle de désalignement ($\theta$) et/ou leur bridage, par actionnement du ou des actionneur(s).

2. Procédé de pilotage d'une ferme d'éoliennes selon la revendication précédente, **caractérisé en ce que** les étapes a), b), c), d) et e) sont réitérées à chaque nouvelle mesure de configuration de vent.

3. Procédé de pilotage d'une ferme d'éoliennes selon l'une des revendications précédentes, **caractérisé en ce que** l'étape a) de détermination des sillages modélisés est réalisée pour une gamme d'angle de désalignement ($\theta$) comprise entre - $\theta$ et + $\theta$, ces valeurs correspondant aux limites définies dans les spécifications des éoliennes, avec notamment $\theta$ égal à 20°.

4. Procédé de pilotage d'une ferme d'éoliennes selon la revendication précédente, **caractérisé en ce que**, dans l'étape a), chaque sillage modélisé pour la gamme d'angle de désalignement ($\theta$) est l'enveloppe de la somme d'une pluralité de sillages modélisés à différentes valeurs d'angle de désalignement dans ladite gamme d'angle ($\theta$), et notamment l'enveloppe des sillages modélisés à - $\theta$ , à + $\theta$ et à 0°.

5. Procédé de pilotage d'une ferme d'éoliennes selon l'une des revendications précédentes, **caractérisé en ce que** l'étape a) de détermination des sillages modélisés est réalisée pour un seuil de déficit de vitesse de vent ($\delta$) compris entre 0,75 m/s et 0,20 m/s, notamment entre 0,70 m/s et 0,45 m/s, et notamment égal à 0,65 m/s.

**6.** Procédé de pilotage d'une ferme d'éoliennes selon l'une des revendications précédentes, **caractérisé en ce que** l'étape a) de détermination des sillages modélisés est réalisée pour un seuil de déficit de vitesse de vent ($\delta$) prenant en compte au moins un des paramètres suivants : le nombre d'éoliennes de la ferme, la distance entre éoliennes, la configuration de la ferme, le positionnement géographique des éoliennes dans la ferme, la rose des vents.

**7.** Procédé de pilotage d'une ferme d'éoliennes selon l'une des revendications précédentes, **caractérisé en ce que**, dans l'étape a), les sillages modélisés sont approximés

- sous forme de représentations en deux dimensions, en considérant les configurations de vent et les sillages à hauteur constante, notamment une hauteur égale à celle de l'axe du rotor portant les pales des éoliennes, de type trapèze dont la plus petite base est la largeur initiale du sillage,
- ou sous forme de représentations à trois dimensions, notamment de type portion de cône dont la plus petite base est la taille initiale du sillage.

**8.** Procédé de pilotage d'une ferme d'éoliennes selon l'une des revendications précédentes, **caractérisé en ce que** les différentes configurations de vent considérées pour réaliser l'étape a) de détermination par modélisation des sillages est l'ensemble des configurations de vents possibles relevées sur une période de temps, notamment sur une année, dans une zone géographique comprenant la ferme d'éoliennes.

**9.** Procédé de pilotage d'une ferme d'éoliennes selon l'une des revendications précédentes, **caractérisé en ce que**, dans l'étape b), les configurations de vent, notamment la distribution de la vitesse et de la direction du vent et/ou la vitesse et la direction du vent, sont mesurées en temps réel au moyen d'au moins un capteur LiDAR et/ou d'au moins un anémomètre et/ou d'au moins un système de contrôle et d'acquisition de données.

**10.** Procédé de pilotage d'une ferme d'éoliennes selon l'une des revendications précédentes, **caractérisé en ce que**, dans l'étape d) de détermination d'au moins un point de fonctionnement de consigne, l'optimisation de la puissance générée par sous-ferme est réalisée pour chacune des sous-fermes en parallèle et/ou en séquentiel.

**11.** Procédé de pilotage d'une ferme d'éoliennes selon l'une des revendications précédentes, **caractérisé en ce que**, dans l'étape d) de détermination d'au moins un point de fonctionnement de consigne, l'optimisation de la puissance générée par sous-ferme est réalisée en prenant en compte les contraintes de fatigue structurelle des éoliennes ou de chaque type d'éolienne de la ferme.

**12.** Procédé de pilotage d'une ferme d'éoliennes selon l'une des revendications précédentes, **caractérisé en ce que** l'étape a) de détermination des sillages modélisés est réalisée hors ligne avec éventuelle(s) mise(s) à jour périodique(s) et/ou éventuelle mise à jour avec la mesure de configuration de vent faite en temps réel dans l'étape c).

**13.** Ferme d'éoliennes, lesdites éoliennes étant d'un seul type ou de différents types, chaque éolienne de ladite ferme d'éoliennes présentant au moins un point de fonctionnement réglable, dont son angle de désalignement ($\theta$) et/ou son bridage, ledit ou lesdits points de fonctionnement étant réglables par au moins un actionneur, **caractérisée en ce que** ladite ferme d'éoliennes comprend ou est connectée à des moyens informatiques pour mettre en œuvre le procédé de pilotage selon l'une des revendications précédentes afin d'appliquer des points de fonctionnement de consigne aux éoliennes de la ferme dont leur angle de désalignement ($\theta$) et/ou leur bridage, en actionnant leurs actionneurs.

[Fig 1]

[Fig 2]

[Fig 3]

[Fig 4]

**EP 4 733 578 A1**

[Fig 5]

[Fig 6]

**21**

[Fig 7]

[Fig 8]

[Fig 9a]

[Fig 9b]

[Fig 10a]

EP 4 733 578 A1

[Fig 10b]

[Fig 11]

w=(7 m/s, 270°)

[Fig 12]

w=(7 m/s, 270°)

[Fig 13a]

[Fig 13b]

[Fig 14a]

[Fig 14b]

[Fig 15]

Europäisches Patentamt

European Patent Office

Office européen des brevets

# RAPPORT DE RECHERCHE EUROPEENNE

Numéro de la demande

EP 25 20 8661

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SHU TONG ET AL: "Decentralised optimisation for large offshore wind farms using a sparsified wake directed graph", APPLIED ENERGY, ELSEVIER SCIENCE PUBLISHERS, GB, vol. 306, 9 octobre 2021 (2021-10-09), XP086882211, ISSN: 0306-2619, DOI: 10.1016/J.APENERGY.2021.117986 [extrait le 2021-10-09] * abrégé * * page 2, section 2, 1er paragraph * * section 3.3 * * section 4 * ----- | 1-13 | INV. F03D7/04 ADD. F03D7/02 |
| X | EP 3 438 448 A1 (ELECTRICITE DE FRANCE [FR]) 6 février 2019 (2019-02-06) * alinéas [0008], [0009], [0011] - [0016], [0019] - [0081] * ----- | 1-13 | |
| X | CN 116 025 512 A (UNIV NORTH CHINA ELECTRIC POWER ET AL.) 28 avril 2023 (2023-04-28) * le document en entier * ----- | 1-13 | **DOMAINES TECHNIQUES RECHERCHES (IPC)** F03D |
| X | SHU TONG ET AL: "Non-centralised coordinated optimisation for maximising offshore wind farm power via a sparse communication architecture", APPLIED ENERGY, ELSEVIER SCIENCE PUBLISHERS, GB, vol. 324, 31 juillet 2022 (2022-07-31), XP087175440, ISSN: 0306-2619, DOI: 10.1016/J.APENERGY.2022.119705 [extrait le 2022-07-31] * le document en entier * ----- | 1-13 | |

Le présent rapport a été établi pour toutes les revendications

| Lieu de la recherche | Date d'achèvement de la recherche | Examinateur |
|---|---|---|
| La Haye | 12 février 2026 | Libeaut, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P4C02)

## ANNEXE AU RAPPORT DE RECHERCHE EUROPEENNE
## RELATIF A LA DEMANDE DE BREVET EUROPEEN NO.

EP 25 20 8661

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2026

| Document brevet cité au rapport de recherche | | Date de publication | Membre(s) de la famille de brevet(s) | | Date de publication |
|---|---|---|---|---|---|
| EP 3438448 | A1 | 06-02-2019 | EP | 3438448 A1 | 06-02-2019 |
| | | | FR | 3069663 A1 | 01-02-2019 |
| CN 116025512 | A | 28-04-2023 | AUCUN | | |

EPO FORM P0460

## RÉFÉRENCES CITÉES DANS LA DESCRIPTION

**Documents brevets cités dans la description**

- EP 4382743 A

- US 20240183337 A

**Littérature non-brevet citée dans la description**

- **F. BERNARDONI** ; **U. CIRI** ; **M. ROTEA** ; **S. LEONARDI**. Real-time identification of clusters of turbines. *Journal of Physics: Conference Series*, September 2020, vol. 1618, 022-032
- Network based estimation of wind fiarm power and velocity data under changing wind direction. **G. M. STARKE** ; **P. STANFEL** ; **C. MENEVEAU** ; **D. F. GAYME** ; **J. KING**. 2021 American Control Conference (ACC). IEEE, 2021, 1803-1810

- **J.A. FREDERIK**. Periodic dynamic induction control of wind farms : proving the potential in simulations and wind tunnel experiments. *Wind Energy Science Discussions*, August 2019
- **J.A FREDERIK**. The helix approach : using dynamic individual pitch control to enhance wake mixing in wind farms. *Wind Energy*, August 2020, vol. 08, 1739-1751